# EUROPÄISCHE PATENTSCHRIFT

(11) **EP 2 501 659 B1**
(45) Veröffentlichungstag und Bekanntmachung des Hinweises auf die Patenterteilung: **22.04.2015**
(21) Anmeldenummer: 10805391.9
(22) Anmeldetag: 13.11.2010
(51) Int. Cl.: C03B 19/08

(54) **KAMMEROFEN ZUR HERSTELLUNG VON GLASSCHAUMPLATTEN ODER FORMKÖRPERN AUS GLASSCHAUM**
CHAMBER FURNACE FOR PRODUCING FOAM GLASS PLATES OR MOLDED BODIES MADE OF FOAM GLASS
FOUR À CHAMBRE DESTINÉ À LA FABRICATION DE PLAQUES DE MOUSSE DE VERRE OU DE CORPS MOULÉS EN MOUSSE DE VERRE

(30) Priorität: 19.11.2009 DE 202009015849 U
(43) Veröffentlichungstag der Anmeldung: 26.09.2012
(73) Patentinhaber: TDC Ltd, 06773 Gräfenhainichen (DE)
(72) Erfinder: BAIER, Ralf, 06785 Oranienbaum (DE); DANIEL, Rainer, 06846 Dessau-Roßlau (DE)
(74) Vertreter: Fischer, Volker
(86) Internationale Anmeldenummer: PCT/DE2010/001338
(87) Internationale Veröffentlichungsnummer: WO 2011/060761

(56) Entgegenhaltungen:
- DE-A1- 1 583 475
- DE-U1- 20 308 406
- JP-A- 11 118 356
- RU-A- 2005 141 024
- US-A- 4 274 825

## Beschreibung

Die Erfindung betrifft einen Kammerofen zur Herstellung von Glasschaumplatten oder Formkörpern aus Glasschaum, welche stabile Verhältnisse für die Produktion von Glasschaumplatten oder von Formkörpern aus Glasschaum gewährleistet, um den Ausschussanteil zu reduzieren und Ausfallzeiten zu senken sowie eine genau kontrollierbare, gleichbleibende Qualität der Produkte zu garantieren.

Zur Zeit werden Glasschaumplatten hauptsächlich in Durchlauföfen hergestellt. Dies erfordert aufgrund langer Kühlzeiten auch lange Kühlstrecken, welche bis zu mehrere hundert Meter lang sein können. Durch schwankende Umgebungsverhältnisse bezüglich Erwärmung, direkter Kühlung und Transport ist die Gefahr eines großen Ausschussanteils in einer solchen Produktionsanlage sehr hoch. Bei einer Störung, selbst nur in einem Teil der Anlage, fällt die ganze Anlage aus, was zu großen Ausfallzeiten der Öfen und somit zu kompletten und teuren Produktionsausfällen führt.

Alternativ besteht auch die Möglichkeit, dass die Platten oder Formkörper in einzelnen Kammeröfen gefertigt werden. Kammeröfen sind aus dem Stand der Technik bekannte Erwärmungseinrichtungen und werden gewöhnlich direkt oder indirekt über die Wände des Ofens durch Gasbrenner, elektrische Widerstandsheizungen, Strahlrohre, Heißluftgebläse oder ähnliche Heizungen beheizt. Man unterscheidet zudem in Öfen, in welchen der Wärmeübergang auf das Erwärmungsgut allein durch Strahlung und natürliche Konvektion oder durch Zwangskonvektion erfolgt. Hierbei ist zu beachten, dass die Wärmeübertragung durch Konvektion nur bei Temperaturen bis zirka 1000 Kelvin wirksam funktioniert. Dies liegt jedoch unterhalb der benötigten Prozesstemperatur zur Glasschaumherstellung. Zudem führt Zwangskonvektion zur mechanischen Beeinflussung des Erwärmungsgutes, was die Prozesse bei der Schaumbildung erheblich stören kann; auch führt Konvektion bei Temperaturen um 700 Kelvin im Abkühlprozess zum Aufbau von Eigenspannungen im Erwärmungsgut, was die Qualität und mechanische Festigkeit der Glasschaumplatten oder Formkörper erheblich beeinträchtigt.

Bei der Verwendung von reinen Strahlungsöfen mit in oben genannter, gewöhnlicher Weise verwendetem Aufbau (Beheizung über die Seitenwände beziehungsweise Decke) entsteht ein Temperaturgradient im Ofen sowohl vom Boden zur Decke als auch von der Mitte des Ofens zu den Seitenwänden. Auch diese "Temperaturschichtung" im Ofen führt bei wirtschaftlichen Ofenvolumina sowohl im Erwärmungs- als auch im Kühlprozess zu unerwünschten Eigenspannungen im Erwärmungsgut und damit zu erheblichen Qualitätsbeeinträchtigungen der Endprodukte.

In der Druckschrift US 4,274,825 A ist ein Ofen mit parallel horizontalen, vertikal beabstandeten Pfaden für Rollbänder beschrieben, die Ton oder Silicat transportieren. In den beiden Pfaden wird die Wärme auf das durchgeführte Material übertragen. Die Bänder sind dabei so angeordnet, dass sie von einem Eingangsende zu einem Austrittsende entlang der parallelen horizontalen, vertikal beabstandeten Pfade durch den Ofen laufen. Der Ofen oder zumindest die Auskleidung des Ofens ist aus feuerfestem Material ausgebildet. Er ist im Wesentlichen in seiner Form über seine gesamte Länge rechteckig ausgebildet. In dem mittleren Abschnitt des Ofens ist eine vertikale Trennwand ausgebildet, die das Innere des Ofens in eine Vorwärmkammer und in eine Brennkammer trennt. Die Trennwand weist zwei vertikal beabstandete Öffnungen auf, an denen die Bänder vorbeilaufen.

Alle Brenner, durch die der Ofen aufgeheizt wird, sind in der Brennkammer angeordnet, während die Vorwärmkammer die Rauch- oder Abgase aus der Brennkammer empfängt. Der Ofen ist im Bereich der Brennkammer mit feuerfestem Material beschichtet, das für sehr hohe Temperaturen ausgelegt ist, während die Vorwärmkammer nicht für so hohe Temperaturen ausgelegt werden muss. Des Weiteren ist ein Kühlofen vorgesehen, der aus einer Reihe von Kammern und jeweils einzeln gesteuerten Umluft-Systemen besteht. Die erwärmte Abluft aus den Kammern des Kühlofens wird über eine gemeinsame Leitung abgeführt und bei Bedarf in der Anlage oder als vorgewärmte Luft an den Brennern eingesetzt.

Aus der Druckschrift DE 1 583 475 A1 ist ein Kammerofen zur Wärmebehandlung von Keramikkörpern bekannt, wobei der Ofen aus mehreren, übereinander angeordneten Wärmebehandlungsräumen und aus zwischen ihnen vorhandenen Heizräumen besteht, wobei die oberen Trennwände der Heizräume dünner als die unteren Trennwände ausgebildet sind. Der Kammerofen besteht aus übereinander angeordneten wärmebeständigen Rahmen, die zugleich die Seitenwände der Wärmebehandlungsräume darstellen, sowie aus zwischen den wärmebeständigen Rahmen angeordneten, übereinander angebrachten wärmebeständigen Schachteln. Letztere enthalten auch die zur Wärmeerzeugung dienenden Bauelemente. Diese Bauelemente können entweder elektrische Heizwiderstände oder Gasbrenner sein. Die Heizwiderstände bzw. Gasbrenner können voneinander unabhängig geregelt werden.

Die infolge der Konvektion im oberen Teil des Wärmebehandlungsraumes erhöhte Wärmestrahlung soll dadurch ausgeglichen werden, dass die oberen Seiten der wärmebeständigen Schachteln dünner als die unteren Seiten ausgebildet sind. Der Ofen ist in Längsrichtung in eine Vorwärmzone und eine Brennzone unterteilt, wobei in der Vorwärmzone zwischen oberhalb und unterhalb der Bänder vorgewärmte Luft durchgeleitet wird.

Der Erfindung liegt daher die Aufgabe zu Grunde, stabile Verhältnisse für die Produktion von Glasschaumplatten oder Formkörpern aus Glasschaum zu gewährleisten, um den Ausschussanteil zu reduzieren und die Ausfallzeiten zu senken sowie eine genau kontrollierbare, gleichbleibende Qualität der Produkte zu garantieren.

Diese Aufgabe wird durch einen Kammerofen zur Herstellung von Glasschaumplatten oder Formkörpern aus Glasschaum gemäß Anspruch 1 gelöst. Dies geschieht dadurch, dass die Platten oder Formkörper in einem Kammerofen gefertigt werden. Alle oben genannten Probleme konventioneller Kammeröfen werden durch die Verwendung spezieller Kammeröfen gelöst, welche erfindungsgemäß folgenden Aufbau beziehungsweise folgende Einbauten haben:

Ein erfindungsgemäßer Kammerofen zur Herstellung von Glasschaumplatten oder Formkörpern aus Glasschaum umfasst einen Wärmeübertragungsraum mit einzelnen, horizontal übereinanderliegenden Wärmeübertragungseinheiten, wobei zwischen jeweils zwei benachbarten Wärmeübertragungseinheiten je eine Teilkammer ausgebildet ist. Jede der auf diese Weise gebildeten horizontal übereinanderliegenden Teilkammern ist somit in einer separaten Wärmeübertragungszone regelbar. Die einzelnen, horizontal übereinanderliegenden Teilkammern sind entweder in Form von Fächern mit Trennwänden oder ohne Trennwände zur Aufnahme von Paletten ausgebildet. Auf diesen Paletten wird das Ausgangsmaterial geschäumt. Die erfindungsgemäße Anordnung der Wärmeübertragungseinheiten beziehungsweise Teilkammern gewährleistet die gleichmäßige Erwärmung und Kühlung aller Paletten, wobei die Wärmeübertragungseinheiten Mittel aufweisen, die eine lokale Wärmezuführung und Wärmeabführung ermöglichen. Jede Teilkammer wird dabei in einer separaten Wärmeübertragungszone durch Heizen beziehungsweise Kühlen geregelt.

Gemäß der Erfindung erfolgt die Beheizung auf elektrischem Wege. Dabei sind für die elektrische Beheizung entweder Heizwendel in oder auf Heizleitertragrohren vorgesehen, wobei jeweils ein Heizleitertragrohr mit der Heizwendel zusammen eine Wärmeübertragungseinheit bildet, oder es können alternativ zur Heizwendel zur elektrischen Beheizung auch SiC-Heizstäbe verwendet werden. Bevorzugt bestehen die Heizleitertragrohre aus Quarzglas, da Quarzglas aufgrund der bekannten guten thermischen und mechanischen Eigenschaften zur Wärmeübertragung besonders geeignet ist.

Die Abkühlung der Glasschaumplatten oder Formkörper aus Glasschaum erfolgt vorteilhaft indirekt durch Wärmeabstrahlung, um größere Spannungen auf den Glasschaumplatten oder Formkörpern zu vermeiden. Hierfür werden die Heizleitertragrohre oder zwischen Heizungen (insbesondere im Falle der Anwendung von SiC-Heizstäben) eingebrachte Kühlrohre erfindungsgemäß mit kalter Luft oder anderen geeigneten, elektrisch nichtleitenden Kühlmedien durchströmt und hierdurch das Erwärmungsgut gekühlt. Die Verwendung der Heizleitertragrohre mit Heizwendel als Wärmeübertragungseinheit führt vorteilhaft zu einer gleichmäßigen Kühlung in allen Teilkammern. Dabei ist für die Kühlung des Erwärmungsgutes durch Durchströmung der Heizleitertragrohre mit kalter Luft eine Kühlluftleitung vorgesehen, über die Luft in die Heizleitertragrohre einleitbar ist.

In einer weiteren bevorzugten Ausgestaltung der Erfindung werden zusätzlich in die Isolation der Seitenwände eines Kammerofens Kühlrohre eingebracht, um eine effektive Hinterwandkühlung zu gewährleisten. Die Abkühlgeschwindigkeit im Kammerofen wird durch den Volumenstrom der Kühlluft geregelt. Gemäß einer vorteilhaften Ausführungsform der Erfindung kann durch die Verwendung von Drosselventilen in jederTeilkammer jede einzelne Teilkammer somit separat und gleichzeitig sowohl beheizt als auch gekühlt werden.

Um den Temperaturgradienten im Kühlprozess von der Mitte zu den Seitenwänden regelbar zu halten, können benachbarte Wärmeübertragungseinheiten, wie Heizleitertragrohre oder Kühlrohre, in gegenläufiger Richtung durchströmt werden.

Vorteilhaft ist die Verwendung eines softwarebasierten Prozessmodells zur Temperaturführung und Sicherstellung des optimalen Temperaturgradienten in und zwischen den einzelnen Teilkammern vorgesehen.

Ein wesentlicher Vorteil des erfindungsgemäßen Kammerofens in allen seinen Ausführungen besteht darin, dass mechanische Erschütterungen der Platten während ihrer Herstellung vermieden werden, weil ein Transport innerhalb des Kammerofens entfällt. Größere Produktionsausfälle können nicht entstehen, da bei einer Störung eines Kammerofens nur ein kleiner Teil der Gesamtanlage betroffen ist. Zudem kann der zeitliche Verlauf der Wärmebehandlung optimal an das Erwärmungsgut angepasst werden.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Figur 1:: den Querschnitt eines erfindungsgemäßen Kammerofens,
- Figur 2:: die Seitenansicht des Kammerofens und
- Figur 3:: ein Temperaturführungsdiagramm zur Prozessführung im Kammerofen.

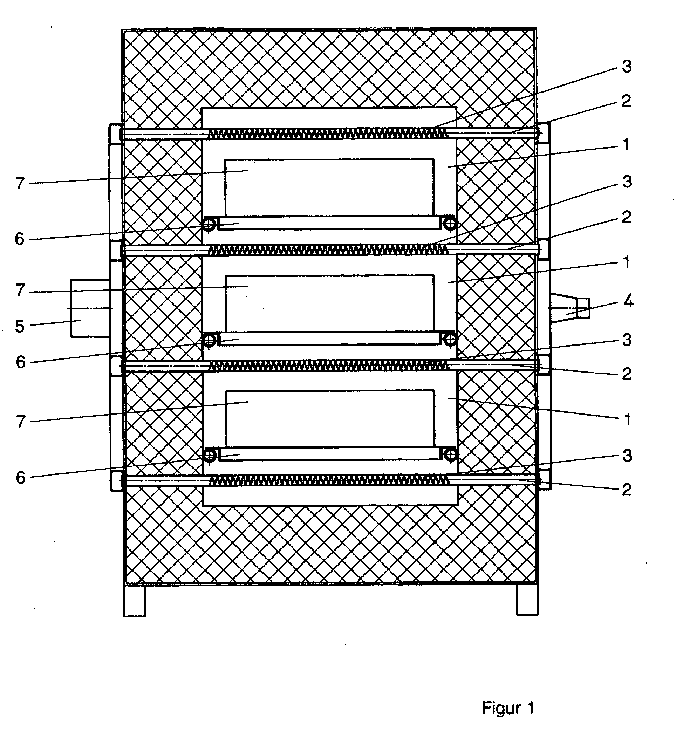

Figur 1 zeigt den Querschnitt eines Kammerofens gemäß der Erfindung. Der dargestellte Ofen ist in drei Fächer 1 (Teilkammern 1) unterteilt. In jedem Fach 1 liegt auf einer Palette 6 jeweils eine Glasschaumplatte 7 beziehungsweise eine Charge 7 zu deren Herstellung. Unter und über jedem Fach 1 (Teilkammer 1), das heißt auch zwischen den einzelnen Fächern 1 (Teilkammern 1), befindet sich jeweils eine Wärmeübertragungseinheit 2 in Form eines Heizleitertragrohres 2. Auf jedes dieser Heizleitertragrohre 2 sind Heizwendel 3 gewickelt, wodurch jeweils eine Wärmeübertragungseinheit 2 gebildet wird. Zum Kühlen wird über die Kühlluftleitung 4 Luft in die Heizleitertragrohre 2 geleitet. Die auf der anderen Ofenseite ausströmende Kühlluft wird in der Abluftleitung 5 zusammengeführt.

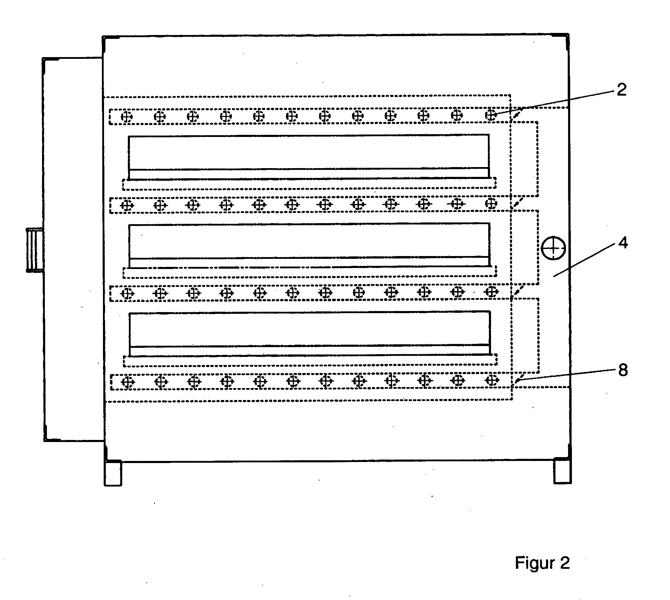

Die Figur 2 zeigt die Seitenansicht des Kammerofens. Die Abluftleitung 5 verteilt die Kühlluft auf die einzelnen Heizleitertragrohre 2. Über die Drosselventile 8 wird die Temperatur beim Kühlen geregelt.

Zur Prozessführung und damit zur Einhaltung der Temperaturen innerhalb der Glasschaumkörper bei der Glasschaumkörperherstellung ist es üblich, Vorversuche durchzuführen, bei denen in die Glasschaumkörperrohlinge Temperaturfühler eingebracht werden, um die Ofentemperatur so zu steuern, dass in den Glasschaumkörperrohlingen sowie den entstandenen Glasschaumkörpern die geforderten Temperaturen eingehalten werden. Die Glasschaumkörper aus diesen Vorversuchen sind dann natürlich verloren. Die anhand der Vorversuche ermittelte Prozessführung (Temperatursteuerung) wird dann bei der Produktion angewendet.

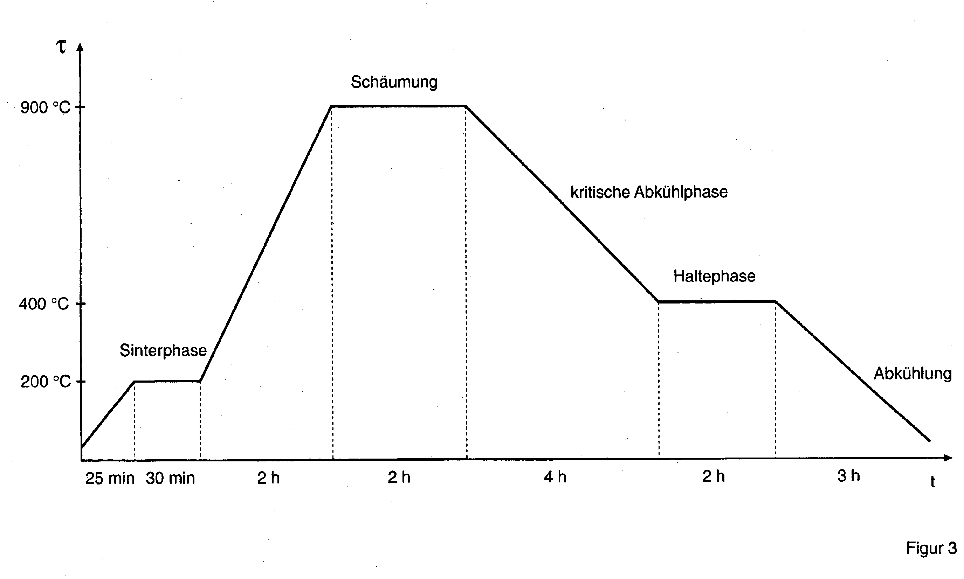

Figur 3 zeigt beispielhaft ein Temperaturführungsdiagramm zur Prozessführung im Kammerofen. Zunächst wird das Ausgangsmaterial innerhalb von 25 Minuten auf 200 °C aufgeheizt und anschließend 30 Minuten lang gesintert. Nach Abschluss der Sinterphase wird die Temperatur innerhalb von 2 Stunden auf 900 °C erhöht, worauf die Schäumung erfolgt. Nach der Schäumungsphase, die 2 Stunden in Anspruch nimmt, wird das heiße Glasschaumprodukt innerhalb eines Zeitraums von 4 Stunden, der kritischen Abkühlphase, auf 400 °C abgekühlt. Es folgt eine zweistündige Haltephase, bei der die Temperatur bei 400 °C konstant gehalten wird. Schließlich endet der Prozess mit einer zirka dreistündigen Abkühlphase, in der das Glasschaumprodukt auf Zimmertemperatur abgekühlt wird und anschließend entnommen werden kann.

### Liste der verwendeten Bezugszeichen

- 1: - Teilkammer, Fach
- 2: - Wärmeübertragungseinheit, Heizleitertragrohr
- 3: - Heizwendel
- 4: - Kühlluftleitung
- 5: - Abluftleitung
- 6: - Palette
- 7: - Charge, Glasschaumplatte
- 8: - Drosselventil

## Patentansprüche

1. Kammerofen zur Herstellung von Glasschaumplatten oder Formkörpern aus Glasschaum, einen Wärmeübertragungsraum aufweisend, wobei im Wärmeübertragungsraum einzelne, horizontal übereinanderliegende Wärmeübertragungseinheiten (2) ausgebildet sind und zwischen zwei benachbarten Wärmeübertragungseinheiten (2) jeweils eine Teilkammer (1) ausgebildet ist,
**dadurch gekennzeichnet, dass**
der Kammerofen elektrisch beheizbar ist, indem entweder Heizwendeln (3) auf Heizleitertragrohren (2) vorgesehen sind, wobei jeweils ein Heizleitertragrohr (2) mit einer Heizwendel (3) zusammen eine Wärmeübertragungseinheit (2) bildet, oder indem SiC-Heizstäbe vorgesehen sind, zwischen denen Kühlrohre eingebracht sind, und dass die Kühlung des Erwärmungsgutes indirekt durch Durchströmung der Heizleitertragrohre (2) oder der zwischen den SiC-Heizstäben eingebrachten Kühlrohre mit kalter Luft oder anderen geeigneten, elektrisch nichtleitenden Kühlmedien erfolgen kann, wobei für die Kühlung des Erwärmungsgutes durch Durchströmung von Heizleitertragrohren (2) mit kalter Luft eine Kühlluftleitung (4) vorgesehen ist, über die Luft in die Heizleitertragrohre (2) einleitbar ist, und auf diese Weise jede der gebildeten, horizontal übereinanderliegenden Teilkammern (1) in einer separaten Wärmeübertragungszone durch Heizen und Kühlen regelbar ist.

2. Kammerofen nach Anspruch 1,
**dadurch gekennzeichnet, dass**
die Heizleitertragrohre (2) aus Quarzglas bestehen.

3. Kammerofen nach Anspruch 1 oder 2,
**dadurch gekennzeichnet, dass**
zusätzlich in die Isolation der Seitenwände des Kammerofens Kühlrohre eingebracht werden.

4. Kammerofen nach einem der Ansprüche 1 bis 3,
**dadurch gekennzeichnet, dass**
durch die Verwendung von Drosselventilen (8) in jeder einzelnen Teilkammer (1) somit jede einzelne Teilkammer (1) separat und gleichzeitig sowohl beheizt als auch gekühlt werden kann.

5. Kammerofen nach einem der Ansprüche 1 bis 4,
**dadurch gekennzeichnet, dass**
benachbarte Wärmeübertragungseinheiten (2) in gegenläufiger Richtung durchströmt werden können.

6. Kammerofen nach einem der Ansprüche 1 bis 5,
**dadurch gekennzeichnet, dass**
zur Temperaturführung und Sicherstellung des optimalen Temperaturgradienten in und zwischen den einzelnen Teilkammern (1) ein softwarebasiertes Prozessmodell verwendet wird.

## Claims

1. Chamber furnace for producing foam glass plates or moulded bodies made of foam glass, said chamber furnace comprising a heat-transfer chamber, wherein individual heat-transfer units (2) lying horizontally one above the other are formed in the heat-transfer chamber and a sub-chamber (1) is formed between every two adjacent heat-transfer units (2),
**characterized in that**
the chamber furnace is electrically heatable, **in that** either heating coils (3) are provided on heating-conductor carrying tubes (2), wherein a heating-conductor carrying tube (2) respectively forms together with a heating coil (3) a heat-transfer unit (2), or **in that** SiC heating rods, between which cooling tubes are incorporated, are provided, and **in that** the cooling of the material that has been heated can take place indirectly by cold air or other suitable, electrically nonconducting cooling media being made to flow through the heating-conductor carrying tubes (2) or the cooling tubes incorporated between the SiC heating rods, wherein a cooling-air line (4) is provided for the cooling of the material that has been heated by making cold air flow through heating-conductor carrying tubes (2), via which line air can be introduced into the heating-conductor carrying tubes (2), and in this way each of the sub-chambers (1) that are formed, lying horizontally one above the other, can be controlled by heating and cooling in a separate heat-transfer zone.

2. Chamber furnace according to Claim 1,
**characterized in that**
the heating-conductor carrying tubes (2) consist of quartz glass.

3. Chamber furnace according to Claim 1 or 2,
**characterized in that**
cooling tubes are additionally incorporated in the insulation of the side walls of the chamber furnace.

4. Chamber furnace according to one of Claims 1 to 3,
**characterized in that**
the use of throttle valves (8) in each individual sub-chamber (1) consequently allows each individual sub-chamber (1) to be both heated and cooled separately and at the same time.

5. Chamber furnace according to one of Claims 1 to 4,
**characterized in that**
adjacent heat-transfer units (2) can be flowed through in opposite directions.

6. Chamber furnace according to one of Claims 1 to 5,
**characterized in that**
a software-based process model is used for temperature control and for ensuring the optimum temperature gradient in and between the individual sub-chambers (1).

## Revendications

1. Four à chambres affecté à la fabrication de plaques en mousse de verre ou de corps moulés en mousse de verre, muni d'un espace de transfert de chaleur, des unités individuelles (2) de transfert thermique, en superposition horizontale, étant ménagées dans ledit espace de transfert de chaleur, et une chambre partielle (1) étant respectivement formée entre deux unités voisines (2) de transfert thermique,
**caractérisé par le fait que**
ledit four à chambres peut être chauffé électriquement, soit en prévoyant des enroulements chauffants (3) implantés sur des tubes (2) de support de conducteurs chauffants, un tube respectif (2) de support de conducteurs chauffants formant alors une unité (2) de transfert thermique en coopération avec un enroulement chauffant (3), soit en prévoyant des barreaux chauffants en SiC entre lesquels des tubulures de refroidissement sont intégrées ; et **par le fait que** le refroidissement du produit chauffé peut s'opérer en mode indirect par circulation d'air froid ou d'autres agents de refroidissement appropriés, électriquement non conducteurs, parcourant lesdits tubes (2) de support de conducteurs chauffants ou lesdites tubulures de refroidissement intégrées entre lesdits barreaux chauffants en SiC, sachant qu'il est prévu, pour le refroidissement dudit produit chauffé en faisant circuler de l'air froid par des tubes (2) de support de conducteurs chauffants, un conduit (4) à air de refroidissement par l'intermédiaire duquel l'air peut être introduit dans lesdits tubes (2) de support de conducteurs chauffants, chacune des chambres partielles (1) formées en superposition horizontale pouvant, de la sorte, être régulée par chauffage et refroidissement dans une zone distincte de transfert de chaleur.

2. Four à chambres selon la revendication 1,
**caractérisé par le fait que**
les tubes (2) de support de conducteurs chauffants consistent en du verre de quartz.

3. Four à chambres selon la revendication 1 ou 2,
**caractérisé par le fait que**
des tubulures de refroidissement sont additionnellement intégrées dans l'isolation des parois latérales dudit four à chambres.

4. Four à chambres selon l'une des revendications 1 à 3,
**caractérisé par le fait que**
l'utilisation de vannes d'étranglement (8), dans chaque chambre partielle (1) individuelle, permet à chaque chambre partielle (1) individuelle d'être aussi bien chauffée que refroidie, distinctement et simultanément.

5. Four à chambres selon l'une des revendications 1 à 4,
**caractérisé par le fait que**
des unités voisines (2) de transfert thermique peuvent être parcourues par une circulation dans une direction opposée.

6. Four à chambres selon l'une des revendications 1 à 5,
**caractérisé par le fait**
**qu'**un modèle de processus, fondé sur un logiciel, est employé pour piloter la température et pour assurer le gradient de température optimal dans les chambres partielles (1) individuelles, et entre ces dernières.
